# EUROPEAN PATENT APPLICATION

(11) **EP 4 046 735 A1**
(43) Date of publication of application: **24.08.2022**
(21) Application number: 20938215.9
(22) Date of filing: 28.05.2020
(51) Int. Cl.: B23D 79/00, B23Q 11/00, B23Q 11/10

(54) **CHAMFERING DEVICE**

(30) Priority: 27.05.2020 CN 202010460527
(71) Applicant: Tec-Spiral Enterprises Tools Co., Ltd., Songjiang, Shanghai 201613 (CN)
(72) Inventor: WANG, Hongjia, Shanghai 201612 (CN)
(74) Representative: Dilg, Haeusler, Schindelmann Patentanwaltsgesellschaft mbH
(86) International application number: PCT/CN2020/092967
(87) International publication number: WO 2021/237580

(57) **Abstract**

A chamfering device. The distance from an outer peripheral face of cutting teeth (300) to an axis of the chamfering device is gradually increased in the direction from a first end of a cutting head (200) to a second end thereof. Intersecting lines of the cutting teeth (300) and groove walls of chip grooves (400) in the radial direction of the chamfering device form first section cutting edges (310) and second section cutting edges (320) which are connected. The first section cutting edges (310) and the second section cutting edges (320) are sequentially arranged in the direction from the first end of the cutting head (200) to the second end thereof. The first section cutting edges (310) and the second section cutting edges (320) are straight line cutting edges and spiral cutting edges, respectively. The first section cutting edges (310) extend along the inclined straight line with a preset included angle with the axis of the chamfering device. A preset included angle is formed between the second section cutting edges (320) and the axis of the chamfering device, and the second section cutting edges (320) extend spirally in the axial direction of the chamfering device. The chamfering device can adapt to chamfering cutting machining of machined holes with different cross-sectional widths.

## Description

### FIELD OF THE INVENTION

The present invention relates to the technical field of machining, particularly to a countersink.

### BACKGROUND

Straight edge countersink and helical edge countersink are widely used in chamfering of machined holes. However, the two kinds of countersink have some shortcomings. When the chamfering section width of the machined hole to be machined is small (the machined hole is just cut) and it is required to chamfer the machined hole using the smaller end of the cutting teeth of the countersink cutting head in the circumferential direction, due to the reaction force of the axial cutting component force during the cutting of the helical edge, the helical edge countersink produces a sliding displacement between the helical edge countersink and the machined hole when the machined hole is cut at the beginning, resulting in difficulty in positioning of the helical edge countersink in the machined hole and easiness to slip out of the machined hole, thus, the smooth machining of the helical edge countersink cannot be guaranteed.

In addition, when the chamfering section width to be machined of the machined hole is large and it is required to chamfer the machined hole using the larger end of the cutting teeth of the countersink cutting head in the circumferential direction, due to the excessively large radial cutting force of the straight edge during the cutting process, the cutting smoothness of the straight edge countersink is low, resulting in low machining quality and accuracy of the chamfers of the machined hole. Therefore, the use of a single straight edge countersink and a helical edge countersink brings considerable inconvenience and limitation of machining quality to the chamfering machining of the machined hole.

### SUMMARY

To overcome the above shortcomings, it is necessary to provide a countersink that can adapt to the machining of chamfers of machined holes with different cross-sectional widths.

A countersink, comprising: a shank and a cutting head, the cutting head is connected to the shank, the outer periphery of the cutting head is provided with corresponding cutting teeth and chip flutes, the distance from the outer peripheral surface of the cutting teeth to the axis of the countersink gradually increases in a direction from a first end of the cutting head to a second end of the cutting head, the line of intersection between the cutting teeth and the wall of the chip flute forms a first segment cutting edge and a second segment cutting edge that are connected in the radial direction of the countersink, the first segment cutting edge and the second segment cutting edge are sequentially disposed along the direction from the first end of the cutting head to the second end of the cutting head, and the first segment cutting edge and the second segment cutting edge are a straight edge and a helical edge, respectively, the first segment cutting edge extends along a skew line with a preset angle with the axis of the countersink, and the second segment cutting edge is disposed at a preset angle with the axis of the countersink, and extends spirally along the axial direction of the countersink, and the chip flute where the second segment cutting edge is positioned spirally extends around the axial direction of the countersink, the first end of the cutting head is the end of the cutting head away from the shank, and the second end of the cutting head is the end of the cutting head approaching to the shank.

In one of the embodiments, there is a plurality of the cutting teeth and the chip flutes, and the plurality of cutting teeth are disposed on the outer circumference of the cutting head at uniform or non-uniform intervals, and the plurality of the chip flutes are corresponding to the plurality of the cutting teeth one-to-one respectively.

In one of the embodiments, the shape of each of the cutting teeth is the same; or the shape of each of the cutting teeth is different; or when the number of the cutting teeth is greater than or equal to three, only part of the cutting teeth among the plurality of cutting teeth have the same shape; and/or
The shape of each of the chip flutes is the same; or the shape of each of the chip flutes is different; or when the number of the chip flutes is greater than or equal to three, only part of the chip flutes among the plurality of chip flutes have the same shape.

In one of the embodiments, the depth of each of the chip flutes is the same; or the depth of each of the chip flutes is different; or when the number of the chip flute is greater than or equal to three, only among the plurality of chip flutes is the depth of part of the chip flute is the same.

In one of the embodiments, the width of the cutting teeth gradually increases in a direction from the first end of the cutting head to the second end of the cutting head.

In one of the embodiments, the width and/or depth of the chip flutes gradually increase in a direction from the first end of the cutting head to the second end of the cutting head.

In one of the embodiments, the cutting head comprises a body portion and an auxiliary portion, the auxiliary portion is disposed between the body portion and the shank, and the diameter of the body portion gradually increases in a direction from the end of the body portion away from the auxiliary portion to the end of the body portion connecting the auxiliary portion, and the cutting teeth and the chip flutes are disposed on the outer periphery of the body portion and the auxiliary portion, the first segment cutting edge is formed on the body portion, and the second segment cutting edge is formed on the body portion.

In one of the embodiments, the line of intersection between the cutting teeth and the wall of the chip flute further forms a third segment cutting edge in the radial direction of the countersink, and the first segment cutting edge, the second segment cutting edge, and the third segment cutting edge are sequentially disposed along the direction from the first end of the cutting head to the second end of the cutting head, and the third segment cutting edge is connected to the end of the second segment cutting edge away from the first segment cutting edge, and is formed on the auxiliary portion, the third segment cutting edge is a helical edge, and the axes of the third segment cutting edge and the countersink are in a preset angle, and extend spirally along the axial direction of the countersink, and the chip flute where the third segment cutting edge is positioned spirally extends along the axial direction of the countersink.

In one of the embodiments, the cutting head further comprises a first transition portion, the auxiliary portion is connected to the shank through the first transition portion, and the chip flute extends to the first transition portion.

In one of the embodiments, the chip flute where the first segment cutting edge is positioned is a first segment chip flute, and the chip flute where the second segment cutting edge is positioned is a second segment chip flute, the second segment chip flute spirally extends along the axial direction of the countersink, the first segment chip flute and the second segment chip flute are in communication with each other, and are disposed along the direction from the first end of the cutting head to the second end of the cutting head.

In the countersink provided by the present invention, when the cross-sectional width of the chamfer to be machined of the machined hole is small and it is required to chamfer the machined hole using the smaller end of the cutting teeth of the cutting head in the circumferential direction (the end the cutting teeth relatively close to the first end of the cutting head), since the first segment cutting edge at the smaller end of the cutting teeth is a straight edge, the straight edge can meet the cutting performance of the conventional helical edge while maintaining approximately the same inclination angle as the conventional helical edge. Compared with a helical edge, the instantaneous sliding displacement of the straight edge in the machined hole when the machined hole is first cut is relatively small, so the straight edge can be positioned in the machined hole more accurately and reliably, thereby effectively overcoming the unstable centering of countersink in the machined holes and easiness to slip out of the machined hole when the machined hole is first cut caused by the reaction force of the axial cutting component of the conventional helical edge, which can facilitate to improve the positioning accuracy of the countersink in the machined hole and ensure the stable machining process of the countersink;
In addition, by setting the smaller end of the cutting teeth as a straight edge, compared to a helical edge, the straight edge can effectively increase the overall accommodation space of the chip flute while ensuring that the strength and sharpness of the smallest end of the cutting teeth meet the cutting requirements, so as to facilitate the timely discharge of the chips generated by cutting teeth during cutting and realize heat dissipation; moreover, the setting of the straight edge can effectively enhance the structural strength of the smallest end of the cutting teeth while ensuring that a space consistent with the accommodating space of the chip flute where the spiral edge is positioned is formed, to avoid the chipping and scrapping of the cutting teeth. In addition, the setting of the straight edge can effectively reduce the overall machining difficulty of the countersink and improve the machining efficiency of the countersink.

When the cross-sectional width of the chamfer to be machined of the machined hole is large and it is required to chamfer the machined hole using the larger end of the cutting teeth of the cutting head in the circumferential direction (the end the cutting teeth relatively close to the second end of the cutting head), the smaller end of the cutting teeth of the cutting head in the circumferential direction has penetrated into and fit with the inner cone wall of the chamfer of the machined hole. At this time, the countersink has basically achieved relative positioning in the machined hole. By setting the second segment cutting edge of the larger end of the cutting teeth as a helical edge, the helical edge can achieve the resolution of cutting force from a complete radial force into a combination of radial force and axial force, which overcomes the drawbacks of vibration, accuracy, and poor quality of the inner surface of the machined hole caused by excessive radial cutting force of the straight edge during the cutting, ensures the smoothness of the cutting and effectively improve the chamfering quality and accuracy of the machined hole;
In addition, since the linear speed of cutting of the larger end of the cutting teeth of the cutting head in the circumferential direction is relatively higher and the cross-sectional width of the chamfer of the machined hole is also larger, the cutting heat generated when the larger end of the cutting teeth of the cutting head in the circumferential direction is larger. By setting the chip flute where the second segment cutting edge of the larger end of the cutting teeth is positioned as a form of a spiral flute extending helically along the axial direction of the countersink, it can facilitate timely discharge of the chips generated when cutting the second segment cutting edge and the first segment cutting edge and take away the cutting heat, and at the same time, leave a larger accommodation space for the chip flute of the countersink, so that air or coolant can enter to cool the workpieces where the countersink and machined hole are positioned.

Therefore, the countersink provided by the present invention can adapt to machining of chamfers of machined holes with different cross-sectional widths, and has a wide range of applications.

### BRIEF DESCRIPTION OF THE DRAWINGS

FIG.1 is a structural representation of a conventional straight edge countersink;
FIG.2 is a structural representation of a conventional helical edge countersink;
FIG.3 is a structural comparison diagram of a conventional helical edge countersink and a straight edge countersink;
FIG.4 is another structural comparison diagram of a conventional helical edge countersink and a straight edge countersink;
FIG. 5 is a structural representation of a countersink provided by an embodiment of the present invention;
FIG.6 is another structural representation of a countersink provided by an embodiment of the present invention;
FIG. 7 is a working schematic diagram of a smaller end of cutting teeth of a countersink provided by an embodiment of the present invention;
FIG. 8 is a structural representation of a chamfer to be machined of a machined hole provided by an embodiment of the present invention;
FIG. 9 is a working schematic diagram of a larger end of cutting teeth of a countersink provided by an embodiment of the present invention;
FIG. 10 is a structural representation of another chamfer to be machined of a machined hole provided by an embodiment of the present invention;
FIG. 11 is another structural representation of a countersink provided by an embodiment of the present invention;
FIG. 12 is a partial structural representation of a countersink provided by an embodiment of the present invention.

### DETAILED DESCRIPTION

In order to facilitate the understanding of the present invention, the present invention will be described in detail with reference to the relevant drawings. The preferred embodiments of the present invention are shown in the drawings. However, the present invention can be implemented in multiple different forms and is not limited to the embodiments described herein. Conversely, the purpose of providing these embodiments is to understand the disclosure of the present invention more thoroughly and comprehensively.

It should be noted that when an element is referred to as being "fixed to/on" another element, the element can be directly on the other element or an intermediate element may be present. When an element is considered to be "connected" to another element, the element can be directly connected to the other element or an intermediate element may be present at the same time. The terms "vertical", "horizontal", "left", "right" and similar expressions used herein are for illustrative purposes only, and do not mean that they are the only embodiments.

Unless otherwise defined, all technical and scientific terms used herein have the same meaning as commonly understood by those skilled in the art of the present invention. The terms used in the specification of the present invention herein are only for the purpose of describing specific embodiments, and are not intended to limit the present invention. The term "and/or" as used herein includes any and all combinations of one or more related listed items.

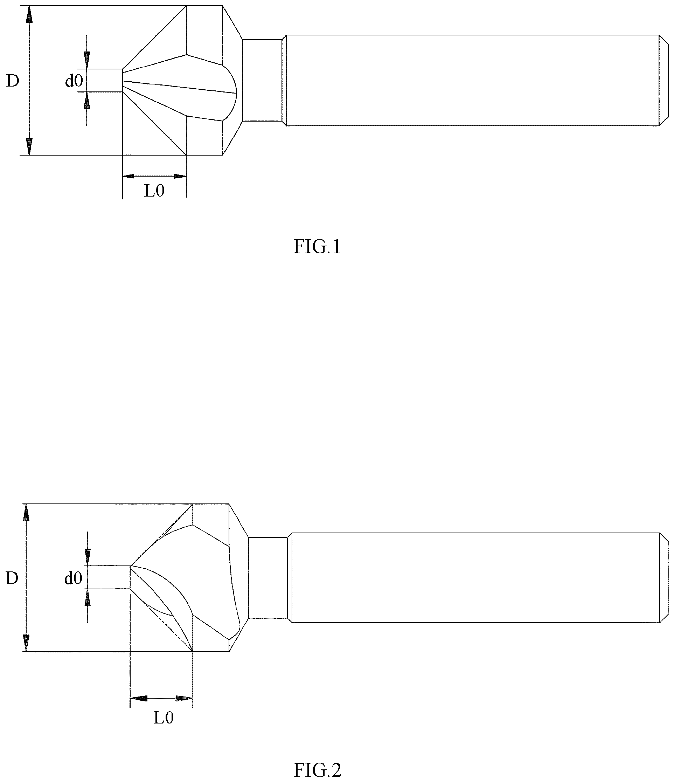

Referring to FIG.1, the construction principle of the straight edge countersink is mainly that the cutting teeth of the cutting head of the straight edge countersink in the circumferential direction are all single straight edges, and the straight edges extend along the skew line with a preset angle with the axis of the straight edge countersink. Referring to FIG.2, the construction principle of the helical edge countersink is mainly that the cutting teeth of the cutting head of the helical edge countersink in the circumferential direction are all single helical edges, and the helical edge is disposed with the axis of the helical edge countersink at a preset angle, and extends spirally around the axis of the helical edge countersink.

According to the respective structural characteristics of the helical edge countersink and the straight edge countersink, an analysis is conducted as follows:
When the helical edge countersink and the straight edge countersink have the same specifications, the main structure dimensions of them must be the same. Referring to FIG.1 and FIG.2, the main structural dimensions of the helical edge countersink and the straight edge countersink include the maximum end diameter D of the cutting teeth of their respective cutting head in the circumferential direction, and the minimum end diameter d₀ of the cutting teeth of their respective cutting head in the circumferential direction, the inclination angle β of the cutting edge of the cutting teeth of their respective cutting head in the circumferential direction, and the length L₀ of the cutting teeth of their respective cutting head in the circumferential direction in the axial direction of the corresponding countersink.

Specifically, the largest end of the cutting teeth in the circumferential direction of the cutting head is the part where the cutting teeth in the circumferential direction of the cutting head correspond to the largest distance from the outer peripheral surface to the axis of the countersink; the smallest end of the cutting teeth in the circumferential direction of the cutting head is the part where the cutting teeth in the circumferential direction of the cutting head correspond to the smallest distance from the outer peripheral surface to the axis of the countersink; the inclination angle β of the cutting edge of the cutting teeth in the circumferential direction of the cutting head is the angle between the cutting edge of the cutting teeth in the circumferential direction of the cutting head and the axis of the countersink on the axial section of the countersink.

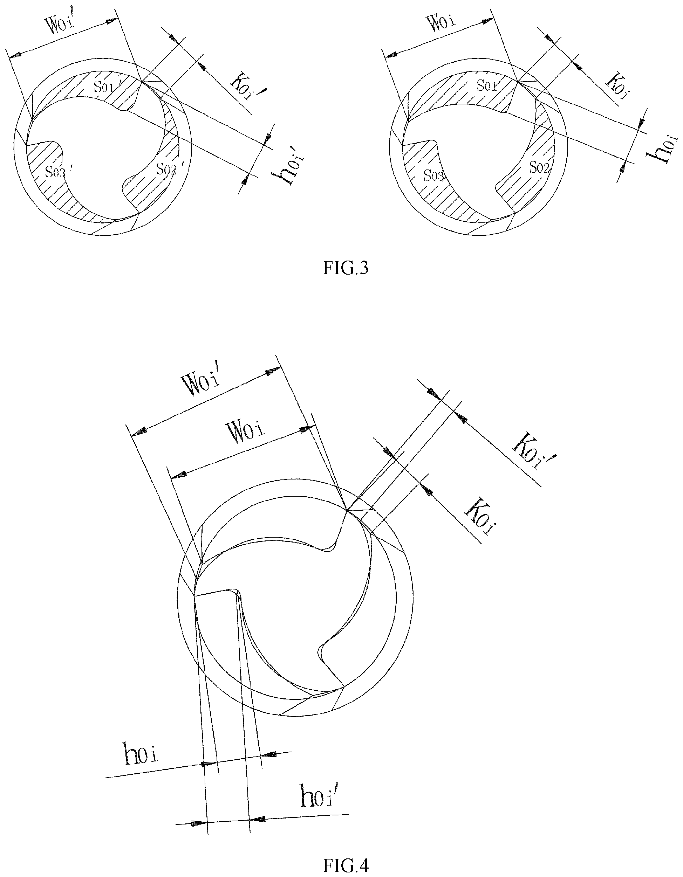

Referring to FIG.3 and FIG.4 at the same time, for the helical edge countersink and the straight edge countersink, while ensuring that their strength and sharpness (the rake angle γ₀ and the clearance angle of the smallest end of the cutting teeth) of the smallest end of the cutting teeth in the circumferential direction of the cutting head meet the cutting requirements and their diameters d₀ and the circumferences (π^{∗} do) of the smallest end of the cutting teeth in the circumferential directions of the cutting heads are the same, when the tooth width K_{0i'} of the smallest end of the cutting teeth in the circumferential direction of the cutting head of the helical edge countersink is constant and equal to the tooth width K₀ᵢ of the smallest end of the cutting teeth in the circumferential direction of the cutting head of the straight edge countersink, namely, K_{0i'}= K₀ᵢ, then the flute width W_{0i'} of the chip flute where the smallest end of the cutting teeth in the circumferential direction of the cutting head of the helical edge countersink is positioned is constant and equal to the flute width W_{0i'} of the chip flute where the smallest end of the cutting teeth in the circumferential direction of the cutting head of the straight edge countersink, namely, W_{0i'}=W₀ᵢ.

At this time, the flute depth h_{0i'} of the chip flute where the smallest end of the cutting teeth in the circumferential direction of the cutting head of the helical edge countersink is positioned is smaller relative to the flute depth hoi of the chip flute where the smallest end of the cutting teeth in the circumferential direction of the cutting head of the straight edge countersink, namely, h_{0i'}<h₀ᵢ. Similarly, on the same cross-section, the cross-sectional area S_{0i'} of the chip flute where the smallest end of the cutting teeth in the circumferential direction of the cutting head of the helical edge countersink is positioned is smaller relative to the cross-sectional area S₀ᵢ of the chip flute where the smallest end of the cutting teeth in the circumferential direction of the cutting head of the straight edge countersink is positioned, namely, S_{0i'} < Soi, then naturally, the accommodation space V_{0i'} of the chip flute where the smallest end of the cutting teeth in the circumferential direction of the cutting head of the helical edge countersink is positioned is smaller relative to the accommodation space V₀ᵢ of the chip flute where the smallest end of the cutting teeth in the circumferential direction of the cutting head of the straight edge countersink is positioned, namely, V_{0i'}<Voi.

In order to make the accommodation space V_{0i'} of the chip flute where the smallest end of the cutting teeth in the circumferential direction of the cutting head of the helical edge countersink is positioned to be consistent with the accommodation space V₀ᵢ of the chip flute where the smallest end of the cutting teeth in the circumferential direction of the cutting head of the straight edge countersinke is positioned, namely, V_{0i'}=V₀ᵢ, it is necessary to make the flute depth h_{0i'} of the chip flute where the smallest end of the cutting teeth in the circumferential direction of the cutting head of the helical edge countersink is positioned to be larger relative to the flute depth h₀ᵢ of the chip flute where the smallest end of the cutting teeth in the circumferential direction of the cutting head of the straight edge countersink, namely, h_{0i'}>h₀ᵢ, by this way, the tooth width K_{0i'} of the smallest end of the cutting teeth in the circumferential direction of the cutting head of the helical edge countersink will become small (namely, the tooth thickness of the smallest end of the cutting teeth in the circumferential direction of the cutting head of the helical edge countersink becomes small), that is, K_{0i'} < K₀ᵢ, which causes the intensity of the smallest end of the cutting teeth in the circumferential direction of the cutting head of the helical edge countersink to decrease, thus chipping and scrapping phenomena occur on the smallest end of the cutting teeth in the circumferential direction of the cutting head of the helical edge countersink.

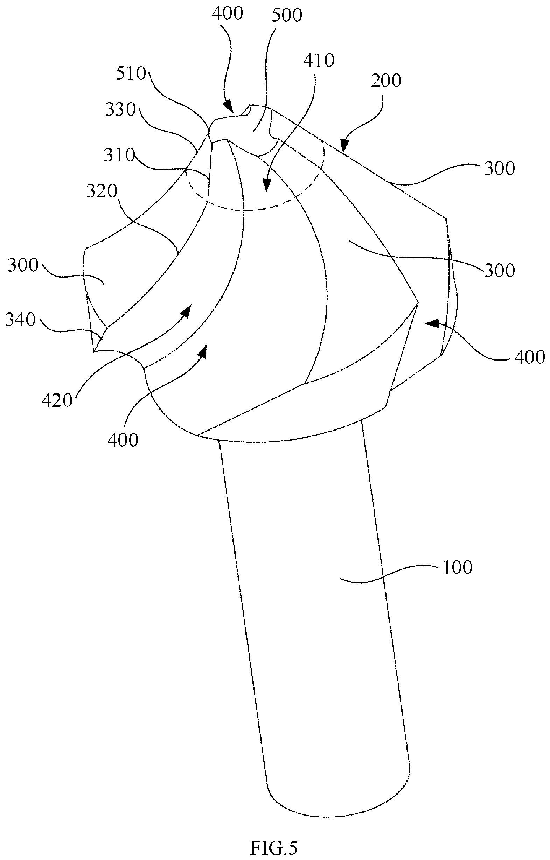

As shown in FIG.5 to FIG.7, embodiments of the present invention provide a countersink, which is configured for chamfering a machined hole 11. Specifically, a machined hole 11 is formed on a workpiece 10. The countersink includes a shank 100 and a cutting head 200, and the cutting head 200 is connected to the shank 100. In one embodiment, the cutting head 200 and the shank 100 are integrally formed.

In one embodiment, the shank 100 is cylindrical, and the end of the shank 100 away from the cutting head 200 is configured to connect a power equipment, and the power equipment is configured to drive the countersink to rotate around its own axis, so as to realize the chamfering of the machined hole 11 by the cutting head 200 of the countersink. It can be understood that, in other embodiments, the shank 100 may have other structural forms, and as long as the shank can be connected with power equipment to realize the transmission of the cutting head 200, it falls within the scope of protection of the present invention.

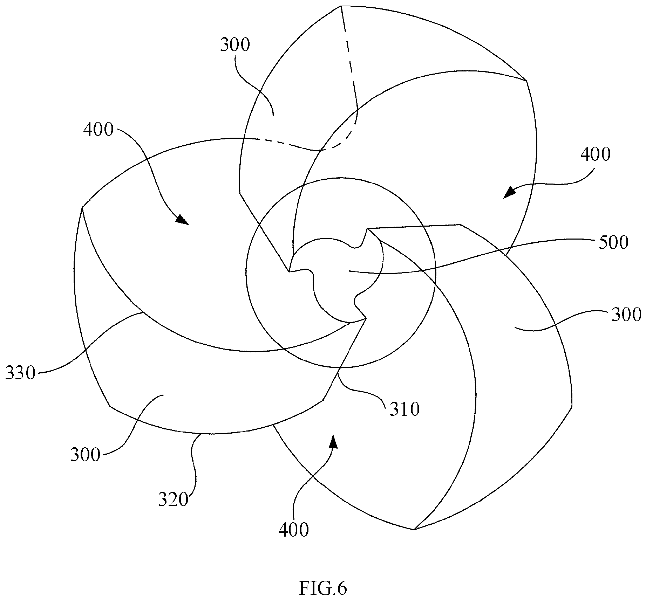

As shown in FIG.5 and FIG.6, in one embodiment, corresponding cutting teeth 300 and chip flutes 400 are provided on the outer periphery of the cutting head 200. The distance between the outer peripheral surface of the cutting teeth 300 and the axis of the countersink increases gradually in the direction from the first end of the cutting head 200 to the second end of the cutting head 200.

The line of intersection between the cutting teeth 300 and the wall of the chip flute 400 forms a first segment cutting edge 310 and a second segment cutting edge 320 that are connected in the radial direction of the countersink, the first segment cutting edge 310 and the second segment cutting edge 320 are sequentially disposed along the direction from the first end of the cutting head 200 to the second end of the cutting head 200, and the first segment cutting edge 310 and the second segment cutting edge 320 are a straight edge and a helical edge, respectively, the first segment cutting edge 310 extends along a skew line with a preset angle with the axis of the countersink and the second segment cutting edge 320 is disposed at a preset angle with the axis of the countersink, and extends spirally along the axial direction of the countersink, and the chip flute 400 where the second segment cutting edge 320 is positioned spirally extends around the axial direction of the countersink, the first end of the cutting head 200 is the end of the cutting head 200 away from the shank 100, and the second end of the cutting head 200 is the end of the cutting head 200 approaching to the shank 100.

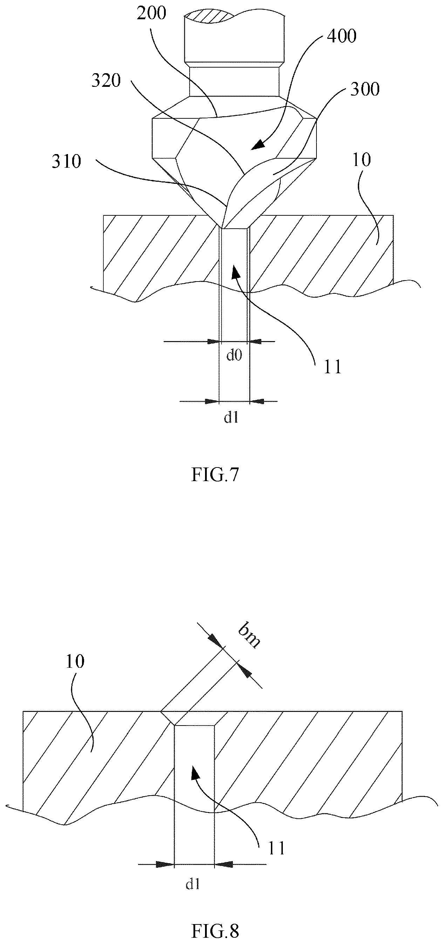

In the countersink provided by the present invention, as shown in FIG.7 and FIG.8, when the cross-sectional width bₘ of the chamfer to be machined of the machined hole 11 is small and it is required to chamfer the machined hole 11 using the smaller end of the cutting teeth 300 of the cutting head 200 in the circumferential direction (the end the cutting teeth 300 relatively close to the first end of the cutting head 200), since the first segment cutting edge 310 at the smaller end of the cutting teeth 300 is a straight edge, the straight edge can meet the cutting performance of the conventional helical edge while maintaining approximately the same inclination angle as the conventional helical edge. Compared with a helical edge, the instantaneous sliding displacement of the straight edge in the machined hole 11 when the machined hole 11 is first cut is relatively small, so the straight edge can be positioned in the machined hole 11 more accurately and reliably, thereby effectively overcoming the unstable centering of countersink in the machined holes 11 and easiness to slip out of the machined hole 11 when the machined hole 11 is first cut caused by the reaction force of the axial cutting component of the conventional helical edge, which can facilitate to improve the positioning accuracy of the countersink in the machined hole 11 and ensure the stable machining process of the countersink;

In addition, by setting the smaller end of the cutting teeth 300 as a straight edge, compared to a helical edge, the straight edge can effectively increase the overall accommodation space of the chip flute 400 while ensuring that the strength and sharpness of the smallest end of the cutting teeth 300 meet the cutting requirements, so as to facilitate the timely discharge of the chips generated by cutting teeth 300 during cutting and realize heat dissipation; moreover, the setting of the straight edge can effectively enhance the structural strength of the smallest end of the cutting teeth 300 while ensuring that a space consistent with the accommodating space of the chip flute 400 where the spiral edge is positioned is formed, to avoid the chipping and scrapping of the cutting teeth 300. In addition, the setting of the straight edge can effectively reduce the overall machining difficulty of the countersink and improve the machining efficiency of the countersink.

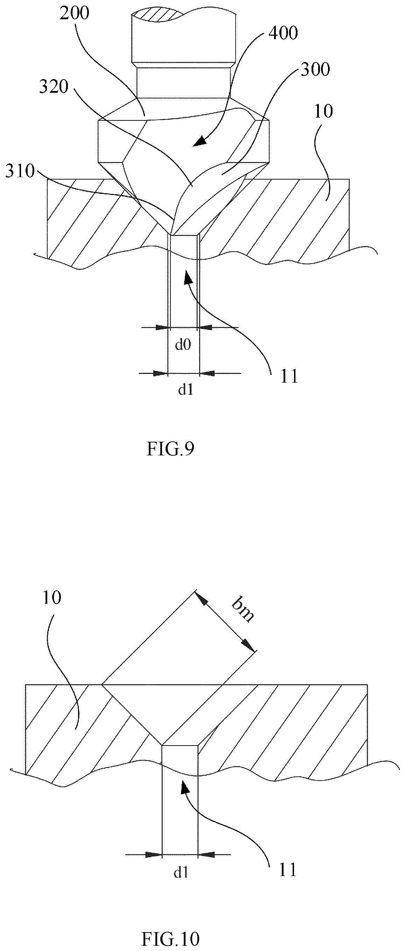

As shown in FIG.9 and FIG.10, when the cross-sectional width bₘ of the chamfer to be machined of the machined hole 11 is large and it is required to chamfer the machined hole 11 using the larger end of the cutting teeth 300 of the cutting head 200 in the circumferential direction (the end the cutting teeth 300 relatively close to the second end of the cutting head 200), the smaller end of the cutting teeth 300 of the cutting head 200 in the circumferential direction has penetrated into and fit with the inner cone wall of the chamfer of the machined hole 11. At this time, the countersink has basically achieved relative positioning in the machined hole 11. By setting the second segment cutting edge 320 of the larger end of the cutting teeth 300 as a helical edge, the helical edge can achieve the resolution of cutting force from a complete radial force into a combination of radial force and axial force, which overcomes the drawbacks of vibration, accuracy, and poor quality of the inner surface of the machined hole 11 caused by excessive radial cutting force of the straight edge during the cutting, ensures the smoothness of the cutting and effectively improve the chamfering quality and accuracy of the machined hole 11;
In addition, since the linear speed V of cutting of the larger end of the cutting teeth 300 of the cutting head 200 in the circumferential direction is relatively higher and the cross-sectional width bₘ of the chamfer of the machined hole 11 is also larger, the cutting heat generated when the larger end of the cutting teeth 300 of the cutting head 200 in the circumferential direction is larger. By setting the chip flute 400 where the second segment cutting edge 320 of the larger end of the cutting teeth 300 is positioned as a form of a spiral flute extending helically along the axial direction of the countersink, it can facilitate timely discharge of the chips generated when cutting the second segment cutting edge 320 and the first segment cutting edge 310 and take away the cutting heat, and at the same time, leave a larger accommodation space for the chip flute 400 of the countersink, so that air or coolant can enter to cool the workpieces 10 where the countersink and machined hole 11 are positioned.

Therefore, the countersink provided by the present invention can adapt to machining of chamfers of machined holes 11 with different cross-sectional widths and has a wide range of applications.

It should be noted that the linear speed V of cutting of the cutting teeth 300 in the circumferential direction of the cutting head 200 is jointly determined by the rotational speed n of the power equipment, the material of the workpiece 10 to be machined, the material of the cutting teeth 300 and the relevant cutting angle. The direction of the linear speed V of cutting of the cutting teeth 300 in the circumferential direction of the cutting head 200 is determined by the direction of the cutting edge of the cutting teeth 300. Specifically, the direction of the cutting edge includes the left cutting direction and the right cutting direction. In this embodiment, the direction of the cutting edge of cutting teeth 300 is the right cutting direction.

In this embodiment, there is a plurality of the cutting teeth 300 and the chip flutes 400, and the plurality of cutting teeth 300 are disposed on the outer circumference of the cutting head 200 at uniform or non-uniform intervals, namely, the plurality of cutting teeth 300 disposed at intervals on the outer circumference of the cutting head 200 can be equal or non-equal teeth, and the plurality of the chip flutes 400 are corresponding to the plurality of the cutting teeth 300 one-to-one respectively. Specifically, when there is a plurality of cutting teeth 300 disposed on the outer circumference of the cutting head 200, the plurality of cutting teeth 300 can be regarded as the 1^{st} cutting tooth, the 2^{nd} cutting tooth..., the n-th cutting tooth successively in a clockwise or counterclockwise direction; wherein n is an integer greater than or equal to 2.

As shown in FIG. 5, in one embodiment, the chip flute 400 is disposed between two adjacent cutting teeth 300. Specifically, in this embodiment, three cutting teeth 300 and three chip flutes 400 are disposed evenly at intervals on the outer circumference of the cutting head 200, and each chip flute 400 is positioned at two adjacent cutting teeth 300. It can be understood that, in other embodiments, the number of cutting teeth 300 and chip flutes 400 may be one, two, or three or more, and the specific setting ways can be selected reasonably according to the actual situations, which are not uniquely limited herein.

Specifically, in one embodiment, the cutting teeth 300 and chip flute 400 jointly constitute a complete cutting unit. The cutting teeth 300 and chip flutes 400 contained in the cutting unit are corresponding to each other one to one. In one embodiment, a cutting unit may include but not limited to one cutting tooth 300 and one chip flute 400, and at least one cutting unit is formed on the outer periphery of the cutting head 200. In this embodiment, a plurality of cutting units are formed on the outer periphery of the cutting head 200.

In one embodiment, the shape of each of the cutting teeth 300 is the same. It can be understood that, in other embodiments, the shape of each of the cutting teeth 300 is different; or when the number of the cutting teeth 300 is greater than or equal to three, only part of the cutting teeth 300 among the plurality of cutting teeth 300 have the same shape.

In one embodiment, the shape of each of the chip flutes 400 is the same; It can be understood that, in other embodiments, or the shape of each of the chip flutes 400 is different; or when the number of the chip flutes 400 is greater than or equal to three, only part of the chip flutes 400 among the plurality of chip flutes 400 have the same shape.

In one embodiment, the depth of each of the chip flutes 400 is the same; or the depth of each of the chip flutes 400 is different; or when the number of the chip flutes 400 is greater than or equal to three, only part of the chip flutes 400 among the plurality of chip flutes 400 have the same depth.

In one embodiment, the cutting teeth 300 extend to both ends of the cutting head 200, and the width of the cutting teeth 300 gradually increases in a direction from the first end of the cutting head 200 to the second end of the cutting head 200.

Further, in one embodiment, the width and/or depth of the chip flutes 400 gradually increase in a direction from the first end of the cutting head 200 to the second end of the cutting head 200. Specifically, in this embodiment, both the width and depth of the chip flutes 400 gradually increase from the first end of the cutting head 200 to the second end of the cutting head 200.

As shown in FIG. 5, in one embodiment, the chip flute 400 where the first segment cutting edge 310 is positioned is a first segment chip flute 410, and the chip flute 400 where the second segment cutting edge 320 is positioned is a second segment chip flute 420, the second segment chip flute 420 spirally extends along the axial direction of the countersink the first segment chip flute 410 and the second segment chip flute 420 are in communication with each other, and are disposed along the direction from the first end of the cutting head 200 to the second end of the cutting head 200.

As shown in FIG. 5 and FIG. 6, in one embodiment, the cutting teeth 300 further include a first edge 330 disposed opposite to the first segment cutting edge 310 and the second segment cutting edge 320. The first edge 330 is disposed at a preset angle with the axis of the countersink, and extends spirally along the axial direction of the countersink.

As shown in FIG. 5 and FIG. 6, in one embodiment, the countersink further includes a supporting end surface 500. The supporting end surface 500 is disposed at the first end of the cutting head 200 and connected to one end of each cutting tooth 300. Specifically, one end of each cutting tooth 300 is connected with the supporting end surface 500 to form a second edge 510, and the second edge 510 is connected between the first edge 330 and the first segment cutting edge 310, the second edge 510 is in an arc shape, and the second edge 510 extends along the axial direction of the countersink.

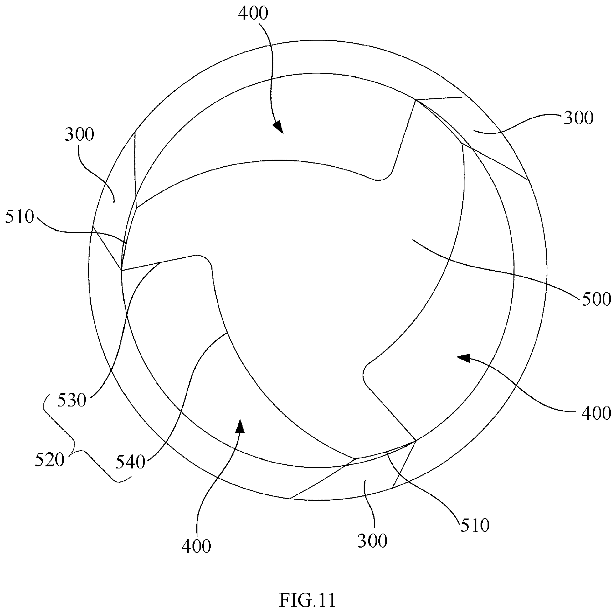

As shown in FIG.5 and FIG.11, further, the line of intersection between the supporting end surface 500 and the wall of the chip flute 400 in the axial direction of the countersink forms a third edge 520. The third edge 520 is connected between two adjacent second edges 510. Further, the third edge 520 includes a first sub-edge 530 and a second sub-edge 540 that are connected. The first sub-edge 530 and the second sub-edge 540 are disposed n a preset angle, and the length of the first sub-edge 530 is less than the length of the second sub-edge 540, the ends of the first sub-edge 530 and the second sub-edge 540 away from each other are connected to two adjacent second edges 510, respectively.

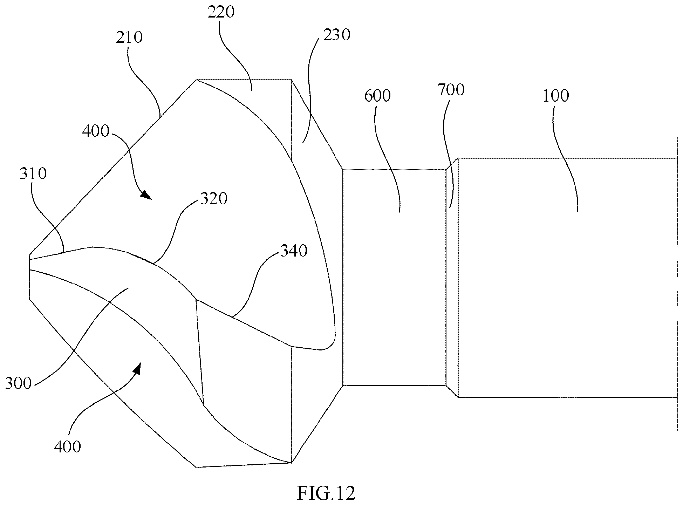

As shown in FIG. 12, in one embodiment, the cutting head 200 comprises a body portion 210 and an auxiliary portion 220. The auxiliary portion 220 is disposed between the body portion 210 and the shank 100. Specifically, the body portion 210 is in a cone shape, and the diameter of the body portion 210 gradually increases in a direction from the end of the body portion 210 away from the auxiliary portion 220 to the end of the body portion 210 connecting the auxiliary portion 220. The cutting teeth 300 and the chip flutes 400 are disposed on the outer periphery of the body portion 210 and the auxiliary portion 220, the first segment cutting edge 310 is formed on the body portion 210, and the second segment cutting edge 320 is formed on the body portion 210. In this embodiment, the auxiliary portion 220 is in an inverted cone shape. The diameter of the auxiliary portion 220 gradually decreases from the end of the auxiliary portion 220 connecting the body portion 210 to the end of the auxiliary portion 220 away from the body portion 210. The diameter of the largest end of the auxiliary portion 220 is equal to the diameter of the largest end of the body portion 210.

As shown in FIG. 5 and FIG. 12, further, in one embodiment, the line of intersection between the cutting teeth 300 and the wall of the chip flute 400 further forms a third segment cutting edge 340 in the radial direction of the countersink, and the first segment cutting edge 310, the second segment cutting edge 320, and the third segment cutting edge 340 are sequentially disposed along the direction from the first end of the cutting head 200 to the second end of the cutting head 200, and the third segment cutting edge 340 is connected to the end of the second segment cutting edge 320 away from the first segment cutting edge 310, and is formed on the auxiliary portion 220. The third segment cutting edge 340 is a helical edge, and the axes of the third segment cutting edge 340 and the countersink are in a preset angle, and extend spirally along the axial direction of the countersink, and the chip flute 400 where the third segment cutting edge 340 is positioned spirally extends along the axial direction of the countersink.

As shown in FIG. 12, in one embodiment, the cutting head 200 further comprises a first transition portion 230, the auxiliary portion 220 is connected to the shank 100 through the first transition portion 230, and the chip flute 400 extends to the first transition portion 230. Specifically, the first transition portion 230 is in an inverted cone shape, and the diameter of the first transition portion 230 gradually decreases in the direction from the end of the first transition portion 230 connected to the auxiliary portion 220 to the end of the first transition portion 230 away from the auxiliary portion 220, and further, in this embodiment, the diameter of the largest end of the first transition portion 230 is equal to the diameter of the smallest end of the auxiliary portion 220.

As shown in FIG. 12, in one embodiment, the countersink further comprises a connecting portion 600, the connecting portion 600 is disposed between the cutting head 200 and the shank 100. In one embodiment, the connecting portion 600 is in a cylindrical shape. The diameter of the connecting portion 600 is less than the diameter of the shank 100, the connecting portion 600 is disposed between the auxiliary portion 220 of the cutting head 200 and the shank 100, more specifically, the connecting portion 600 is disposed between the first transition portion 230 of the cutting head 200 and the shank 100. The diameter of the smallest end of the first transition portion 230 is equal to the diameter of the connecting portion 600.

As shown in FIG. 12, in one embodiment, the countersink further comprises a second transition portion 700, the connecting portion 600 is connected to the shank 100 through the second transition portion 700. The second transition portion 700 is in a cone shape, and the diameter of the second transition portion 700 gradually increases in the direction from the connecting portion 600 to the shank 100. The diameter of the smallest end of the second transition portion 700 is equal to the diameter of the connecting portion 600, and the diameter of the largest end of the second transition portion 700 is equal to the diameter of the shank 100.

The technical features of the foregoing embodiments can be combined arbitrarily. In order to describe them more concisely, not all possible combinations of the technical features in the embodiments are described. However, as long as there is no contradiction in the combination of these technical features, it should be considered within the scope described in this specification.

The foregoing embodiments only describe a few modes of execution of the present invention, and the description is relatively concrete and detailed, but it should not be understood as a limitation on the scope of the present invention. It should be pointed out that for those of ordinary skill in the art, without departing from the concept of the present invention, several modifications and improvements can be made, and these all fall within the scope of protection of the present invention. Therefore, the scope of protection of the present invention should be subject to the appended claims.

## Claims

1. A countersink, comprising: a shank and a cutting head, the cutting head is connected to the shank, the outer periphery of the cutting head is provided with corresponding cutting teeth and chip flutes, the distance from the outer peripheral surface of the cutting teeth to the axis of the countersink gradually increases in a direction from a first end of the cutting head to a second end of the cutting head, the line of intersection between the cutting teeth and the wall of the chip flute forms a first segment cutting edge and a second segment cutting edge that are connected in the radial direction of the countersink, the first segment cutting edge and the second segment cutting edge are sequentially disposed along the direction from the first end of the cutting head to the second end of the cutting head, and the first segment cutting edge and the second segment cutting edge are a straight edge and a helical edge, respectively, the first segment cutting edge extends along a skew line with a preset angle with the axis of the countersink, and the second segment cutting edge is disposed at a preset angle with the axis of the countersink, and extends spirally along the axial direction of the countersink, and the chip flute where the second segment cutting edge is positioned spirally extends around the axial direction of the countersink, the first end of the cutting head is the end of the cutting head away from the shank, and the second end of the cutting head is the end of the cutting head approaching to the shank.

2. The countersink according to claim 1, wherein there is a plurality of the cutting teeth and the chip flutes, and the plurality of cutting teeth are disposed on the outer circumference of the cutting head at uniform or non-uniform intervals, and the plurality of the chip flutes are corresponding to the plurality of the cutting teeth one-to-one respectively

3. The countersink according to claim 2, wherein the shape of each of the cutting teeth is the same; or the shape of each of the cutting teeth is different; or when the number of the cutting teeth is greater than or equal to three, only part of the cutting teeth among the plurality of cutting teeth have the same shape; and/or
The shape of each of the chip flutes is the same; or the shape of each of the chip flutes is different; or when the number of the chip flutes is greater than or equal to three, only part of the chip flutes among the plurality of chip flutes have the same shape.

4. The countersink according to claim 2, wherein the depth of each of the chip flutes is the same; or the depth of each of the chip flutes is different; or when the number of the chip flutes is greater than or equal to three, only part of the chip flutes among the plurality of chip flutes have the same depth.

5. The countersink according to claim 1, wherein the width of the cutting teeth gradually increases in a direction from the first end of the cutting head to the second end of the cutting head.

6. The countersink according to claim 1, wherein the width and/or depth of the chip flutes gradually increase in a direction from the first end of the cutting head to the second end of the cutting head.

7. The countersink according to claim 1, wherein the cutting head comprises a body portion and an auxiliary portion, the auxiliary portion is disposed between the body portion and the shank, and the diameter of the body portion gradually increases in a direction from the end of the body portion away from the auxiliary portion to the end of the body portion connecting the auxiliary portion, and the cutting teeth and the chip flutes are disposed on the outer periphery of the body portion and the auxiliary portion, the first segment cutting edge is formed on the body portion, and the second segment cutting edge is formed on the body portion.

8. The countersink according to claim 7, wherein the line of intersection between the cutting teeth and the wall of the chip flute further forms a third segment cutting edge in the radial direction of the countersink, and the first segment cutting edge, the second segment cutting edge, and the third segment cutting edge are sequentially disposed along the direction from the first end of the cutting head to the second end of the cutting head, and the third segment cutting edge is connected to the end of the second segment cutting edge away from the first segment cutting edge, and is formed on the auxiliary portion, the third segment cutting edge is a helical edge, and the axes of the third segment cutting edge and the countersink are in a preset angle, and extend spirally along the axial direction of the countersink, and the chip flute where the third segment cutting edge is positioned spirally extends along the axial direction of the countersink.

9. The countersink according to claim 7, wherein the cutting head further comprises a first transition portion, the auxiliary portion is connected to the shank through the first transition portion, and the chip flute extends to the first transition portion.

10. The countersink according to claim 1, wherein the chip flute where the first segment cutting edge is positioned is a first segment chip flute, and the chip flute where the second segment cutting edge is positioned is a second segment chip flute, the second segment chip flute spirally extends along the axial direction of the countersink, the first segment chip flute and the second segment chip flute are in communication with each other, and are disposed along the direction from the first end of the cutting head to the second end of the cutting head.
